# EUROPEAN PATENT SPECIFICATION

(11) **EP 2 898 872 B1**
(45) Date of publication and mention of the grant of the patent: **15.08.2018**
(21) Application number: 13850127.5
(22) Date of filing: 24.10.2013
(51) Int. Cl.: A61J 1/10, B32B 27/08

(54) **MEDICAL CONTAINER**
MEDIZINISCHER BEHÄLTER
RÉCIPIENT MÉDICAL

(30) Priority: 31.10.2012 JP 2012240054
(43) Date of publication of application: 29.07.2015
(73) Proprietor: Kyoraku Co., Ltd., Kyoto-shi, Kyoto 602-0912 (JP)
(72) Inventor: SANO, Takeru, Yamato-shi Kanagawa 242-0018 (JP); UCHIHASHI, Kentaro, Yamato-shi Kanagawa 242-0018 (JP)
(74) Representative: Sommer, Andrea
(86) International application number: PCT/JP2013/078801
(87) International publication number: WO 2014/069323

(56) References cited:
- EP-A1- 1 391 295
- JP-A- 2006 314 490
- JP-A- 2006 314 490
- JP-A- 2012 136 598
- JP-A- 2012 136 598
- US-A1- 2006 024 519

## Description

### TECHNICAL FIELD

This invention relates to a medical container to be filled with a variety of liquid medicines, particularly to an improvement of a medical container subjected to sterilization by radiation irradiation.

### BACKGROUND ART

An example of a medical container to be filled with a variety of liquid medicines is a blow molding bottle, a blow molding bag, and the like formed by blow molding of plastic. By blow molding, the container is efficiently manufacturable. In recent years, medical container known as vial has also been manufactured by blow molding technique.

However, as compared to a general container, the medical container is subject to severe requirements in terms of chemical resistance, gas barrier performance and the like. The medical container is required to have transparency, mechanical strength, and the like in addition to the above performances. In order to meet such requirements, a variety of studies has been conducted on the plastic material for use in the medical container and the layer structure.

For instance, Patent Literature 1 discloses a sterilizable container made of a plastic film having at least two layers. The container is flexible and is sterilized before use. Patent Literature 1 further describes that the first layer is made of poly(ethylene-vinyl acetate) while the second and third layers are made of polyethylene or the like. The container disclosed in Patent Literature 1 does not use the material containing plasticizers. Therefore, the container can suppress to the minimum the transfer of the material such as acetic acid to the content in the container. Further, the container can serve as a transparent flexible plastic container satisfying the medical standards. The container disclosed in Patent Literature 1 exhibits a mechanical strength enough durable the drop test, and is scarcely deformed or broken when subjected to heat sterilization. The container is excellent in that the container does not stick to other container during or after the heat sterilization.

Likewise, Patent Literature 2 discloses a medical tool made of a laminate having at least three layers. Each layer of the laminate has a predetermined density, and is made of polyethylene polymerized by a metallocene catalyst or an ethylene-α-olefin copolymer. The medical tool disclosed in Patent Literature 2 is preferably applicable to a platelet storage bag or the like. Patent Literature 2 describes that the medical tool is excellent in the flexibility, the transparency and the adhesiveness, and that the medical tool adjusts the gas transmittance, and enables the inflation molding and the sterilization by radiation irradiation.
Patent Literature 3 discloses a medical container comprising a polyethylene resin having a long-chain branch structure (see claim 1). The container may have multiple layers and may be prepared by blow molding (see paragraph [0028]). EP 1391295 A1 discloses a medical container subjected to a sterilization treatment by radiation irradiation, being made of a multi-layered product.

### CITATION LIST

### PATENT LITERATURE

Patent Literature 1: JP-B-06-51049
Patent Literature 2: JP-A-2002-136572
Patent Literature 3: JP-A-2006-314490

### SUMMARY OF THE INVENTION

### PROBLEMS TO BE SOLVED BY THE INVENTION

For medical containers the sterilization treatment is necessary. As such sterilization treatment, for instance, the steam sterilization has been conducted. In recent years, a variety of sterilization methods has been proposed. As disclosed in Patent Literature 2, the sterilization treatment by radiation irradiation is coming into wider use. As compared to the high pressure steam sterilization by autoclave, gas sterilization with use of ethylene oxide, and the like, the sterilization treatment by radiation irradiation is advantageous in terms of the low cost and the short time required for the sterilization treatment. Further, the sterilization treatment by radiation irradiation is also advantageous in that no harmful substance is left.

Accordingly, the medical containers made of a polyethylene resin (e.g., those as disclosed in Patent Literatures 1 and 2) are also expected to be subjected to the sterilization treatment by radiation irradiation. However, the series of studies conducted by the inventors have revealed that when a container made of a polyethylene resin is subjected to the sterilization treatment by radiation irradiation, an acid substance (carboxylic acid) is generated.

According to the experiment conducted by the inventors, when an extraction test is conducted in a severe testing, pH-value becomes an acid value. As the result, the container may not satisfy the standard that requires the difference from the blank to be within 1.5. The generation of an acid substance may adversely affect the content of the container. Particularly in terms of the medical container to be filled with liquid medicines or the like, the generation of the acid substances needs to be suppressed to the minimum.

The invention is proposed with the background as described above. The object of the invention is to provide a medical container that is excellent in the basic performances such as chemical resistance, gas barrier performance, transparency and mechanical strength, and that scarcely generates acid substances even when subjected to a sterilization treatment by radiation irradiation.

### SOLUTIONS TO THE PROBLEMS

For the sake of the objects described above, the inventors have devoted themselves to a series of studies for a long time. As the result thereof, the inventors have found that by using a certain polyethylene, the medical container is greatly suppressed from generating acid substances even when subjected to the sterilization treatment by radiation irradiation.

The invention has been completed based on the expertise obtained therefrom. More specifically, a medical container according to an aspect of the invention is subjected to a sterilization treatment by radiation irradiation, and the medical container includes an inner surface. In the medical container, at least the inner surface is made of a polyethylene resin having a long-chain branch structure.

### EFFECTS OF THE INVENTION

According to the aspect of the invention, the medical container is excellent in the basic performances such as chemical resistance, gas barrier performance, transparency and mechanical strength, and the medical container scarcely generates acid substances even when subjected to a sterilization treatment by radiation irradiation.

### DESCRIPTION OF EMBODIMENTS

In the description that follows, embodiments of a medical container according to the aspect of the invention will be described in detail.

The medical container according to the aspect of the invention is made of a polyethylene resin. Typical examples of polyethylene are high pressure low density polyethylene (LDPE), mid-to-low pressure high density polyethylene (HDPE) and linear short-chain branched polyethylene (LLDPE). However, in the aspect of the invention, polyethylene having a long-chain branch structure is in use.

An example of such polyethylene having a long-chain branch structure (hereinafter referred to as long-chain branched polyethylene) is the one disclosed in JP-A-2012-136598. The polyethylene as disclosed in the publication has a branch structure only at the terminal end of a long polyethylene chain, and thus the number of the branch structures is small as compared to typical polyethylene.

Such long-chain branched polyethylene is manufactured by conducting an ethylene polymerization with use of a catalyst made of: an organic modified clay mineral formed by modifying a clay mineral categorized as hectorite of the smectite group by a certain organic compound; and an organic aluminum compound.

The physical properties of the long-chain branched polyethylene in use may be suitably determined. For instance, the density of the long-chain branched polyethylene is preferably in a range of 925 to 970 kg/m³ (the value of density measured in accordance with JIS K7676). More preferably, the density is in a range of 930 to 960 kg/m³. Further, the long-chain branched polyethylene in use preferably exhibits two peaks in the molecular weight measurement by GPC.

Further, the ratio (Mw/Mn) of the weight average molecular weight (Mw) to the number average molecular weight (Mn) exhibited by the long-chain branched polyethylene in use is in a range of 2.0 to 7.0, preferably in a range of 2.5 to 7.0, more preferably in a range of 3.0 to 6.0. The number average molecular weight (Mn) measured by GPC is preferably 15,000 or more, more preferably in a range of 15,000 to 100,000, further more preferably in a range of 15,000 to 50,000.

The number of long-chain branches in the long-chain branched polyethylene in use is preferably 0.02 or more per 1000 carbon atoms in the main chain. The number of long-chain branches in a fraction having Mn of 100,000 or more, which is obtained by molecular weight fractioning, is 0.15 or more per 1000 carbon atoms in the main chain. The ratio of the fraction having the number average molecular weight Mn of 100,000 or more, which is obtained by molecular weight fractioning, is preferably less than 40% of the entire polymer.

The physical property values of such long-chain branched polyethylene are within the range preferable for securing the formability to form the medical container, the mechanical properties of the formed container, and the like.

The medical container according to the aspect of the invention is made of the long-chain branched polyethylene described above. The layer structure is a multi-layer structure.

The structure is a three layer structure or any other multi-layer structure including 3 or more layers. The inner and outer layers are made of the long-chain branched polyethylene described above. In any case, by making the innermost layer of the long-chain branched polyethylene described above, the influence due to the sterilization by radiation irradiation (i.e., the influence over the content due to the generation of acid substances) can be suppressed.

The layers other than the innermost and outer layer may be made of any resin material. For instance, any one of layers other than the innermost layer may be made of long-chain branched polyethylene. Alternatively, any one of layers other than the innermost layer may be made of typical polyethylene such as high pressure low density polyethylene (LDPE), mid-to-low pressure high density polyethylene (HDPE) and linear short-chain branched polyethylene (LLDPE). Further alternatively, such other layer may be made of any other olefin resin, copolymer, or the like.

One of the layers is formed as a functional layer excellent in gas barrier performance or the like. The functional layer is made of a resin having high gas barrier performance. The gas barrier resin is ethylene-vinyl alcohol copolymer resin.

The layer(s) other than the innermost layer may be added with various additives. Examples of such additives are light shielding agents (e.g., titanium oxide particles, zinc oxide particles, silicon dioxide particles) and ultraviolet absorbers (e.g., benzotriazole ultraviolet absorber, benzophenone ultraviolet absorber, cyanoacrylate ultraviolet absorber). Other than the above, antioxidants, colorants and the like may be added thereto.

The medical container according to the aspect of the invention is applicable to, for instance, a container to be filled with eye drops or any other liquid medicine, vial, and a transfusion (liquid medicine) bag. As a matter of course, the medical container according to the aspect of the invention is not limited to the above applicability, but may be applicable to any medical container in general for medical usages.

Little is known about the reasons or the detailed mechanisms by which the use of long-chain branched polyethylene leads to the non-presence of acid substances even after the sterilization treatment by radiation irradiation. However, this fact has been experimentally confirmed. Accordingly, according to the aspect of the invention, the medical container maintains the basic performances such as chemical resistance, gas barrier performance, transparency and mechanical strength, and greatly suppresses the generation of acid substances even when subjected to the sterilization treatment by radiation irradiation. The aspect of the invention provides a highly reliable medical container.

In the description made thus far, the embodiments of the invention have been described. However, needless to say, the invention is not limited to the embodiments described above. The invention may be applied with a variety of modifications or improvements as long as such modifications and improvements do not depart from the invention.

### EXAMPLE

In the next description, the examples to which the invention is applied will be described with reference to the experiment results. In this example, two cylindrical containers each having an internal volume of 8 ml and two cylindrical containers each having an internal volume of 32 ml were made from different materials by blow molding. The density thereof was measure in accordance with JIS K7676 while the melt flow rate (MFR) was measured in accordance with JIS K7210. The melting point was measured by a differential scanning calorimeter (DSC).

### Example - not part of the invention

An eye drop container of a single layer was made of long-chain branched polyethylene by blow molding. The used long-chain branched polyethylene had a density of 0.928 g/cm³, a melt flow rate (MFR) of 1 g/10 min, and the melting point of 113°C.

### Comparative Example 1

The same container as in Example was made by blow molding using linear short-chain branched polyethylene (LLDPE) instead of the long-chain branched polyethylene. The used linear short-chain branched polyethylene (LLDPE) had a density of 0.919 g/cm³, a melt flow rate (MFR) of 2.1 g/10 min, and the melting point of 119°C.

### Comparative Example 2

The same container as in Example was made by blow molding using high pressure low density polyethylene (HP-LDPE) instead of the long-chain branched polyethylene. The used high pressure low density polyethylene (HP-LDPE) had a density of 0.919 g/cm³, a melt flow rate (MFR) of 1 g/10 min, and the melting point of 109°C.

### Comparative Example 3

The same container as in Example was made by blow molding using high density polyethylene (HDPE) instead of the long-chain branched polyethylene. The used high density polyethylene (HDPE) had a density of 0.949 g/cm³, a melt flow rate (MFR) of 0.3 g/10 min, and the melting point of 126°C.

### Comparative Example 4

The same container as in Example was made by blow molding using linear short-chain branched polyethylene (LLDPE) instead of the long-chain branched polyethylene. The used linear short-chain branched polyethylene (LLDPE) had a density of 0.86 g/cm³, a melt flow rate (MFR) of 0.5 g/10 min, and the melting point of 48°C.

### Evaluation

With respect to each of the medical containers (eye drop containers) manufactured respectively as Example and Comparative Examples, an evaluation was conducted to see the presence of acid substances, transparency and steam barrier performance. Table 1 sets out the results. The presence of acid substances was determined pursuant to the following conditions. The container having an internal volume of 8 ml and subjected to the sterilization by radiation irradiation was cleaned with deionized water two times, and with millipore water one time. Subsequently, 2.69 ml of liquid medicine was put into the container, and the container was sealed. The sealed container was left in a thermostatic chamber for one day at 70°C. Thereafter, the sealed container was taken out from the thermostatic chamber, and left at a normal temperature for one hour. After 0.5 ml of the liquid medicine was added with 0.0248 ml of potassium chloride, pH value was measured. When a difference between the measured pH value and the pH value likewise measured with use of a glass container was 1.0 or more, the container was rated as "NG." When the difference is 0.5 to 1.0, the container was rated as "Fair." When the difference is 0.5 or less, the container was rated as "OK."

For the sake of the measurement of the transparency, a test piece having a size of width: 9 mm, length: 40 mm and thickness: 1 mm was manufactured. By soaking the test piece into an ultraviolet absorption spectra measurement cell, the transmittance of the wavelength 450 nm in water was measured. When the transmittance was 70% or more, the test piece was rated as "OK." When the transmittance was 50% or more but less than 70%, the test piece was rated as "Fair." When the transmittance was less than 50%, the test piece was rated as "NG."

In term of the steam barrier performance, 20 ml of water was put into the container having the internal volume of 32 ml, and the transmission quantity per day at 55°C (humidity dry) was measured. As the standard, when the transmission quantity was 0.008 g or less, the container was rated as "OK." When the transmission quantity was 0.008 g or more but 0.015 g or less, the container was rated as "Fair." When the transmission quantity was more than 0.015 g, the container was rated as "NG."

**Table 1**

| | Resin type | Density (g/cm³) | MFR (g/10 min) | Melting point (°C) | Acid substance | Transparency | Steam barrier performance |
|---|---|---|---|---|---|---|---|
| Example | Long-chain molecular polyethylene | 0.928 | 1 | 113 | OK | OK | OK |
| Comparative Example 1 | LLDPE | 0.919 | 2.1 | 119 | NG | OK | Fair |
| Comparative Example 2 | HP-LDPE | 0.919 | 1 | 109 | Fair | OK | Fair |
| Comparative Example 3 | HDPE | 0.949 | 0.3 | 126 | Fair | NG | OK |
| Comparative Example 4 | LLDPE | 0.86 | 0.5 | 48 | NG | OK | NG |

As is apparent from Table 1, the medical container (eye drop container) according to the Example exhibits high transparency and excellent steam barrier performance, and generates few acid substances. On the other hand, in the medical containers (eye drop containers) according to Comparative Examples 1 to 4 (i.e., the containers made of typical polyethylene), the generation of acid substances has been observed, and thus the influence over the content is concerned.

## Claims

1. A medical container subjected to a sterilization treatment by radiation irradiation, comprising:
an inner surface, wherein
at least the inner surface is made of a polyethylene resin having a long-chain branch structure and wherein
the medical container is made of a multi-layered molding product, **characterized in that**
the inner layer and the outer layer thereof are made of a polyethylene resin having a long-chain branch structure and at least one layer is made of ethylenevinyl alcohol copolymer resin and
wherein the transmittance of the wavelength 450 nm is 70 % or more and the transmission quantity per day at 55 °C is 0.008 g or less.

2. The medical container according to claim 1, wherein the medical container is formed by blow molding.

3. The medical container according to any one of claims 1 or 2, wherein
the polyethylene resin having the long-chain branch structure has a density of 925 to 970 kg/m³ and a melt flow rate (MFR) of 0.1 to 100 g/10 minutes,
the polyethylene resin exhibits two peaks in a molecular weight measurement by gel permeation chromatography,
a ratio (Mw/Mn) of a weight average molecular weight (Mw) to a number average molecular weight (Mn) exhibited by the polyethylene resin is in a range of 2.0 to 7.0, and
when the polyethylene resin is subjected to molecular weight fractioning, the number of long-chain branches in a fraction having Mn of 100,000 or more is 0.15 or more per 1000 carbon atoms in a main chain.

## Patentansprüche

1. Medizinischer Behälter, ausgesetzt einer Sterilisationsbehandlung durch Strahlungsbestrahlung, umfassend:
eine Innenoberfläche, wobei
mindestens die Innenoberfläche aus einem Polyethylenharz mit einer langkettigen Verzweigungsstruktur hergestellt ist und wobei
der medizinische Behälter aus einem mehrschichtigen Formprodukt hergestellt ist,
**dadurch gekennzeichnet, dass**
die Innenschicht und die Außenschicht davon aus einem Polyethylenharz mit einer langkettigen Verzweigungsstruktur hergestellt sind und mindestens eine Schicht aus Ethylen/Vinylalkohol-Copolymerharz hergestellt ist und
wobei die Transmission der Wellenlänge 450 nm 70 % oder mehr beträgt und die Transmissionsquantität pro Tag bei 55 °C 0,008 g oder weniger beträgt.

2. Medizinischer Behälter gemäß Anspruch 1, wobei der medizinische Behälter durch Blasformen gebildet wird.

3. Medizinischer Behälter gemäß einem der Ansprüche 1 oder 2, wobei das Polyethylenharz mit der langkettigen Verzweigungsstruktur eine Dichte von 925 bis 970 kg/m³ und einen Schmelzfließindex (MFR) von 0,1 bis 100 g/10 Minuten aufweist,
das Polyethylenharz in einer Molekulargewichtsmessung durch Gelpermeationschromatografie zwei Peaks zeigt,
ein Verhältnis (Mw/Mn) eines Gewichtsmittels des Molekulargewichts (Mw) zu einem Zahlenmittel des Molekulargewichts (Mn), welches das Polyethylenharz aufweist, in einem Bereich von 2,0 bis 7,0 liegt, und
wenn das Polyethylenharz Molekulargewichtsfraktionierung unterworfen wird, die Anzahl an langkettigen Verzweigungen in einer Fraktion mit Mn von 100.000 oder höher 0,15 oder mehr pro 1000 Kohlenstoffatome in einer Hauptkette beträgt.

## Revendications

1. Récipient à usage médical soumis à un traitement de stérilisation par exposition à un rayonnement, comprenant :
une surface interne, au moins la surface interne étant constituée d'une résine de polyéthylène ayant une structure ramifiée à longues chaînes et
le récipient à usage médical étant constitué d'un produit moulé multicouche,
**caractérisé en ce que**
la couche interne et la couche externe de celui-ci sont constituées d'une résine de polyéthylène ayant une structure ramifiée à longues chaînes et au moins une couche est constituée de résine de copolymère d'éthylène-alcool vinylique et
la transmittance de la longueur d'onde de 450 nm étant supérieure ou égale à 70 % et la hauteur de la perméance par jour à 55 °C étant inférieure ou égale à 0,008 g.

2. Récipient à usage médical selon la revendication 1, le récipient à usage médical étant formé par moulage par soufflage.

3. Récipient à usage médical selon l'une quelconque des revendications 1 ou 2,
la résine de polyéthylène ayant la structure ramifiée à longues chaînes ayant une masse volumique de 925 à 970 kg/m³ et un indice de fluidité à chaud (MFR) de 0,1 à 100 g/10 minutes,
la résine de polyéthylène présentant deux pics dans une mesure de masse moléculaire par chromatographie par perméation de gel,
un rapport (Mw/Mn) d'une masse moléculaire moyenne en poids (Mw) à une masse moléculaire moyenne en nombre (Mn) présenté par la résine de polyéthylène étant dans une plage de 2,0 à 7,0 et
lorsque la résine de polyéthylène est soumise à un fractionnement suivant la masse moléculaire, le nombre de ramifications à longues chaînes dans une fraction ayant une Mn supérieure ou égale à 100 000 étant supérieur ou égal à 0,15 pour 1000 atomes de carbone dans une chaîne principale.
